# EUROPÄISCHE PATENTANMELDUNG

(11) **EP 3 835 107 A1**
(43) Veröffentlichungstag der Anmeldung: **16.06.2021**
(21) Anmeldenummer: 20204019.2
(22) Anmeldetag: 27.10.2020
(51) Int. Cl.: B60L 1/00

(54) **VERFAHREN ZUM ABSCHÄTZEN EINES TEMPERIERUNGSENERGIEVERBRAUCHS EINES ELEKTROFAHRZEUGS, VERFAHREN ZUM ABSCHÄTZEN EINER REICHWEITE EINES ELEKTROFAHRZEUGS**

(30) Priorität: 12.12.2019 DE 102019219450
(71) Anmelder: Robert Bosch GmbH, 70442 Stuttgart (DE)
(72) Erfinder: Buechele, Markus, 71672 Marbach am Neckar (DE); Rauscher, Matthias, 71636 Ludwigsburg (DE); Dorn, Marcel, 74360 Ilsfeld (DE)

(57) **Zusammenfassung**

Die Erfindung betrifft ein erstes Verfahren zum Abschätzen eines Temperierungsenergieverbrauchs eines Elektrofahrzeugs. Die Erfindung betrifft ferner ein zweites Verfahren zum Abschätzen einer Reichweite eines Elektrofahrzeugs. Die Erfindung betrifft auch ein Fahrerassistenzsystem, das zur Ausführung des ersten und/oder des zweiten Verfahrens eingerichtet ist. Weiterhin betrifft die Erfindung ein Computerprogramm, das Befehle umfasst, die bei der Ausführung durch einen Computer diesen veranlassen, das erste und/oder das zweite Verfahren auszuführen. Die Erfindung betrifft ferner ein computerlesbares Speichermedium, das Befehle umfasst, die bei der Ausführung durch einen Computer diesen veranlassen, das erste und/oder das zweite Verfahren auszuführen. Ferner betrifft die Erfindung ein Elektrofahrzeug, das zur Durchführung des erfindungsgemäßen ersten und/oder zweiten Verfahrens eingerichtet ist.

## Beschreibung

Die Erfindung betrifft ein erstes Verfahren zum Abschätzen eines Temperierungsenergieverbrauchs eines Elektrofahrzeugs. Die Erfindung betrifft ferner ein zweites Verfahren zum Abschätzen einer Reichweite eines Elektrofahrzeugs. Die Erfindung betrifft auch ein Fahrerassistenzsystem, das zur Ausführung des ersten und/oder des zweiten Verfahrens eingerichtet ist. Weiterhin betrifft die Erfindung ein Computerprogramm, das Befehle umfasst, die bei der Ausführung durch einen Computer diesen veranlassen, das erste und/oder das zweite Verfahren auszuführen. Die Erfindung betrifft ferner ein computerlesbares Speichermedium, das Befehle umfasst, die bei der Ausführung durch einen Computer diesen veranlassen, das erste und/oder das zweite Verfahren auszuführen. Ferner betrifft die Erfindung ein Elektrofahrzeug, das zur Durchführung des erfindungsgemäßen ersten und/oder zweiten Verfahrens eingerichtet ist.

### Stand der Technik

Es zeichnet sich ab, dass in Zukunft vermehrt elektrisch angetriebene Kraftfahrzeuge zum Einsatz kommen werden. Solche elektrisch angetriebenen Kraftfahrzeuge, wie z.B. Elektrofahrzeuge, umfassen jeweils ein Antriebssystem mit mindestens einem Elektromotor sowie einer dem mindestens einen Elektromotor zugeordneten Leistungselektronik und ein elektrisches Energieversorgungssystem, das mindestens ein Batteriesystem aufweist. Dabei umfasst das Batteriesystem eine Batterie aus einer oder mehreren Batteriezellen und ein Batteriemanagementsystem zur Steuerung und Überwachung der Batterie.

Es ist wichtig, einen Ladezustand der Batterie zu kontrollieren und den Fahrer hinsichtlich der Restkapazität der Batterie während des Betriebs zu informieren. Dabei wird eine Reichweite des Elektrofahrzeugs anhand eines aktuellen Ladezustands der Batterie veranschlagt und dann dem Fahrer auf einer Sammelanzeige angezeigt, so dass er abschätzen kann, wie weit er noch fahren kann, bis ein Aufladen des Elektrofahrzeugs erforderlich wird.

In modernen Elektrofahrzeugen werden immer mehr Systeme, wie beispielsweise das Antriebssystem und das Batteriesystem, verbaut, die temperiert werden müssen, um eine Betriebstemperatur zu erreichen. Darüber hinaus wird ein Innenraum des Elektrofahrzeugs zum Wohlgefühl auch temperiert.

Aus dem Dokument US 2013/0158758 A1 sind ein System und ein Verfahren zum Berechnen einer Reichweite eines Elektrofahrzeugs bekannt. In dem Verfahren wird der Energieverbrauch einer Klimaanlage beim Gesamtenergieverbrauch einer Batterie nicht berücksichtigt.

Das Dokument US 2016/0098639 A1 offenbart ein Verfahren und eine Vorrichtung zum Schätzen des Energieverbrauchs basierend auf einer Temperatur.

### Offenbarung der Erfindung

Es wird ein erstes Verfahren zum Abschätzen eines Temperierungsenergieverbrauchs eines Elektrofahrzeugs vorgeschlagen.

Dabei wird zunächst eine Umgebungstemperatur gemessen. Anschließend werden eine Ist-Temperatur und eine Soll-Temperatur bestimmt. Unter der Ist-Temperatur wird eine aktuelle Temperatur eines Innenraums des Elektrofahrzeugs und/oder von zu temperierenden Komponenten des Elektrofahrzeugs verstanden, während unter der Soll-Temperatur eine gewünschte Temperatur des Innenraums des Elektrofahrzeugs und/oder eine gewünschte Betriebstemperatur von zu temperierenden Komponenten des Elektrofahrzeugs verstanden wird.

Folgend wird ein erster Teiltemperierungsenergieverbrauch in einer transienten Phase anhand einer vorzeichenbehafteten Temperaturdifferenz zwischen der Ist- und Soll-Temperatur aus vorgespeicherten typischen ersten Teiltemperierungsenergieverbräuchen ermittelt. Dabei ist unter der transienten Phase eine Phase zu verstehen, in der das Elektrofahrzeug einen erhöhten Leistungsbedarf zur Temperierung der zu temperierenden Komponenten und/oder des Innenraums hat. Die typischen ersten Teiltemperierungsenergieverbräuche sind dabei in Abhängigkeit von der vorzeichenbehafteten Temperaturdifferenz zwischen der Ist- und Soll-Temperatur vorgespeichert. Dabei ist zwischen den zu temperierenden Komponenten und dem Innenraum zu unterscheiden, da einer der beiden Bereiche bereits temperiert sein kann, während der andere noch eine Temperaturdifferenz aufweist.

Beispielsweise ist die Ist-Temperatur des Innenraums gleich 10 °C und die Soll-Temperatur des Innenraums gleich 22 °C. Der typische erste Teiltemperierungsenergieverbrauch zum Aufheizen des Innenraums von 10 °C auf 22 °C wird unter eine Temperaturdifferenz gleich 12 K vorgespeichert. Somit spielt das Temperaturniveau keine Rolle. Ein erster Teiltemperierungsenergieverbrauch für eine Ist-Temperatur gleich 0 °C und eine Soll-Temperatur gleich 12 °C wäre identisch. Mit einer vorzeichenbehafteten Temperaturdifferenz wird zwischen einem Heizfall und einem Kühlfall unterschieden. Die typischen ersten Teiltemperierungsenergieverbräuche können beispielsweise für Temperaturdifferenzen von -40 K bis +40 K vorgespeichert werden.

Anschließend oder gleichzeitig wird ein zweiter Teiltemperierungsenergieverbrauch in einer stationären Phase anhand der Umgebungstemperatur aus vorgespeicherten typischen zweiten Teiltemperierungsenergieverbräuchen ermittelt. Dabei ist unter der stationären Phase eine Phase zu verstehen, in der der zweite Teiltemperierungsenergieverbrauch nahezu konstant ist. Die typischen zweiten Teiltemperierungsenergieverbräuche sind dabei in Abhängigkeit von der Umgebungstemperatur vorgespeichert.

Die Summe des ersten und zweiten Teiltemperierungsenergieverbrauchs stellt dann den abgeschätzten Temperierungsenergieverbrauch in der transienten Phase dar.

Bevorzugt wird ein Nutzungsprofil eines Fahrers und/oder eines Fahrgasts gespeichert, wobei das Nutzungsprofil erste Teiltemperierungsenergieverbräuche des Fahrers und/oder des Fahrgasts von vergangenen Fahrzyklen in Abhängigkeit von der vorzeichenbehafteten Temperaturdifferenz zwischen der Ist- und Soll-Temperatur und zweite Teiltemperierungsenergieverbräuche des Fahrers und/oder des Fahrgasts der vergangenen Fahrzyklen in Abhängigkeit von der Umgebungstemperatur umfasst.

Das Nutzungsprofil umfasst darüber hinaus auch eine Kurzzeitdurchschnittsgeschwindigkeit, eine Langzeitdurchschnittsgeschwindigkeit sowie einen Kurzzeit- und einen Langzeitdurchschnittsenergieverbrauch zur Berechnung eines entfernungsbezogenen durchschnittlichen Antriebsenergieverbrauchs.

Vorzugsweise werden die vorgespeicherten typischen ersten und zweiten Teiltemperierungsenergieverbräuche an das Nutzungsprofil des Fahrers und/oder des Fahrgasts angelernt.

Es wird ferner ein zweites Verfahren zum Abschätzen einer Reichweite eines Elektrofahrzeugs vorgeschlagen.

Dabei wird zunächst ein Temperierungsenergieverbrauch nach dem erfindungsgemäßen ersten Verfahren abgeschätzt.

Danach oder gleichzeitig wird ein Ladezustand von mindestens einer Batterie des Elektrofahrzeugs ermittelt. Dabei wird ein Energieinhalt der mindestens einen Batterie aus dem Ladezustand berechnet.

Folgend wird ein entfernungsbezogener durchschnittlicher Antriebsenergieverbrauch des Elektrofahrzeugs anhand des ermittelten Ladezustands und aus vorgespeicherten Antriebsenergieverbräuchen berechnet.

Anschließend oder gleichzeitig wird eine durchschnittliche Geschwindigkeit des Elektrofahrzeugs anhand des ermittelten Ladezustands und aus vorgespeicherten Geschwindigkeiten berechnet.

Danach wird der ermittelte zweite Teiltemperierungsenergieverbrauch in einen entfernungsbezogenen Wert anhand der berechneten durchschnittlichen Geschwindigkeit des Elektrofahrzeugs umgerechnet.

Folgend wird die Reichweite des Elektrofahrzeugs aus dem berechneten Energieinhalt der mindestens einen Batterie, dem ersten Teiltemperierungsenergieverbrauch, dem umgerechneten entfernungsbezogenen Wert des ermittelten zweiten Teiltemperierungsenergieverbrauchs und dem berechneten entfernungsbezogenen durchschnittlichen Antriebsenergieverbrauch berechnet. Für die Berechnung der korrigierten verfügbaren Batterieenergie wird zunächst der ermittelte erste Teiltemperierungsenergieverbrauch komplett von dem berechneten Energieinhalte der mindestens einen Batterie abgezogen. Danach wird der ermittelte erste Teiltemperierungsenergieverbrauch um diejenige Energiemenge korrigiert, die bereits zur Temperierung verwendet wurde. Danach wird eine Summe aus dem umgerechneten entfernungsbezogenen Wert des ermittelten zweiten Teiltemperierungsenergieverbrauchs und dem berechneten entfernungsbezogenen durchschnittlichen Antriebsenergieverbrauch berechnet. Zur Berechnung der Reichweite des Elektrofahrzeugs wird dann die korrigierte verfügbare Batterieenergie durch die Summe aus dem umgerechneten entfernungsbezogenen Wert des ermittelten zweiten Teiltemperierungsenergieverbrauchs und dem berechneten entfernungsbezogenen durchschnittlichen Antriebsenergieverbrauch geteilt.

Bevorzugt wird die berechnete Reichweite des Elektrofahrzeugs ausgegeben. Beispielsweise kann die berechnete Reichweite einem Fahrer des Elektrofahrzeugs auf einer Sammelanzeige angezeigt werden, so dass er informiert wird, wie weit er noch fahren kann, bis ein Aufladen der mindestens einen Batterie erforderlich wird.

Bevorzugt werden ein Langzeitdurchschnittsverbrauch und ein Kurzzeitdurchschnittsverbrauch aus den vorgespeicherten Antriebsenergieverbräuchen berechnet. Unter Langezeit- und Kurzzeitdurchschnittsverbrauch wird verstanden, dass der Durchschnittsverbrauch mithilfe eines gleitenden Mittelwerts über eine lange bzw. eine kurze Zeitkonstante berechnet wird. Beispielsweise ist eine lange Zeitkonstante gleich 10 min, während eine kurze Zeitkonstante gleich 10 s ist. Damit würde der Langzeitdurchschnittsverbrauch immer den durchschnittlichen Verbrauch der vergangenen 10 Minuten und der Kurzzeitdurchschnittsverbrauch immer den durchschnittlichen Verbrauch der vergangenen 10 Sekunden beinhalten. Dabei sind der Langzeit- und der Kurzzeitdurchschnittsverbrauch entfernungsbezogen.

Der entfernungsbezogene durchschnittliche Antriebsenergieverbrauch wird dann aus dem Langzeitdurchschnittsverbrauch und dem Kurzzeitdurchschnittsverbrauch in Abhängigkeit vom Ladezustand der mindestens einen Batterie gewichtet berechnet. Ist die mindestens eine Batterie vollgeladen, d.h. mit einem Ladezustand von 100%, wird ausschließlich der Langzeitdurchschnittsverbrauch verwendet. Ist die mindestens eine Batterie komplett entladen, d.h. mit einem Ladezustand von 0%, würde ausschließlich der Kurzzeitdurchschnittsverbrauch verwendet werden. Liegt der Ladezustand zwischen 0% und 100%, wird ein Mittelwert aus einem gewichteten Langzeitdurchschnittsverbrauch und einem gewichteten Kurzzeitdurchschnittsverbrauch gebildet.

Vorzugsweise werden eine Langzeitdurchschnittsgeschwindigkeit und eine Kurzzeitdurchschnittsgeschwindigkeit aus den vorgespeicherten Geschwindigkeiten berechnet. Unter Langezeit- und Kurzzeitdurchschnittsgeschwindigkeit wird verstanden, dass die Durchschnittsgeschwindigkeit mithilfe eines gleitenden Mittelwerts über eine lange bzw. eine kurze Zeitkonstante berechnet wird. Beispielsweise ist eine lange Zeitkonstante gleich 10 min, während eine kurze Zeitkonstante gleich 10 s ist. Damit würde die Langzeitdurchschnittsgeschwindigkeit immer die durchschnittliche Geschwindigkeit der vergangenen 10 Minuten und die Kurzzeitdurchschnittsgeschwindigkeit immer die durchschnittliche Geschwindigkeit der vergangenen 10 Sekunden beinhalten.

Die durchschnittliche Geschwindigkeit des Elektrofahrzeugs wird aus der Langzeitdurchschnittsgeschwindigkeit und der Kurzzeitdurchschnittsgeschwindigkeit in Abhängigkeit vom Ladezustand der mindestens einen Batterie berechnet. Ist die mindestens eine Batterie vollgeladen, d.h. mit einem Ladezustand von 100%, wird ausschließlich die Langzeitdurchschnittsgeschwindigkeit verwendet. Ist die mindestens eine Batterie komplett entladen, d.h. mit einem Ladezustand von 0%, würde ausschließlich die Kurzzeitdurchschnittsgeschwindigkeit verwendet werden. Liegt der Ladezustand zwischen 0% und 100%, wird ein Mittelwert aus einer gewichteten Langzeitdurchschnittsgeschwindigkeit und einer gewichteten Kurzzeitdurchschnittsgeschwindigkeit gebildet.

Bevorzugt umfasst das erfindungsgemäße zweite Verfahren einen Schritt der Überwachung eines Abschlusses der transienten Phase durch Prüfung der Temperaturdifferenz zwischen der Ist- und der Soll-Temperatur. Durch die Überwachung können die Umgebungstemperatur, die Ist-Temperatur sowie die Soll-Temperatur stets erfasst werden. Dabei wird die transiente Phase als abgeschlossen angesehen, wenn die Temperaturdifferenz zwischen der Ist- und der Soll-Temperatur in einem vorgegebenen Bereich, wie beispielsweise in einem Bereich von -2 K bis +2 K, bevorzugt von -1 K bis +1 K, liegt. Alternativ kann der Abschluss der transienten Phase durch Überwachung der Leistung für die Temperierung erkannt werden. Sobald sich die Leistung nicht mehr nennenswert ändert, kann die transiente Phase als abgeschlossen angesehen werden.

Vorzugsweise wird das erfindungsgemäße zweite Verfahren nach dem Vorliegen des Abschlusses der transienten Phase fortgesetzt.

Statt der Ermittlung eines zweiten Teiltemperierungsenergieverbrauchs in einer stationären Phase anhand der Umgebungstemperatur aus vorgespeicherten typischen zweiten Teiltemperierungsenergieverbräuchen wird beim Fortsetzen des erfindungsgemäßen zweiten Verfahrens ein aktueller zweiter Teiltemperierungsenergieverbrauch anhand von aktuellen Gegebenheiten ermittelt.

Folgend oder gleichzeitig wird ein aktueller Ladezustand der mindestens einen Batterie ermittelt. Dabei wird ein aktueller Energieinhalt der mindestens einen Batterie aus dem aktuellen Ladezustand berechnet.

Anschließend wird ein entfernungsbezogener durchschnittlicher Antriebsenergieverbrauch des Elektrofahrzeugs anhand des aktuellen Ladezustands und aus den vorgespeicherten Antriebsenergieverbräuchen berechnet.

Bevorzugt werden ein Kurzzeit- und ein Langzeitdurchschnittsverbrauch nach dem Abschluss der transienten Phase ermittelt, die über den aktuellen Ladezustand der mindestens einen Batterie gewichtet werden.

Danach oder gleichzeitig wird eine durchschnittliche Geschwindigkeit des Elektrofahrzeugs anhand des aktuellen Ladezustands und aus den vorgespeicherten Geschwindigkeiten berechnet.

Bevorzugt werden eine Kurzzeit- und eine Langzeitdurchschnittsgeschwindigkeit nach dem Abschluss der transienten Phase ermittelt, die über den aktuellen Ladezustand der mindestens einen Batterie gewichtet werden.

Anschließend wird der aktuelle zweite Teiltemperierungsenergieverbrauch in einen entfernungsbezogenen Wert anhand der berechneten durchschnittlichen Geschwindigkeit des Elektrofahrzeugs umgerechnet.

Folgend wird eine aktuelle Reichweite des Elektrofahrzeugs aus dem aktuellen Energieinhalt der mindestens einen Batterie, dem umgerechneten entfernungsbezogenen Wert des aktuellen zweiten Teiltemperierungsenergieverbrauchs und dem entfernungsbezogenen durchschnittlichen Antriebsenergieverbrauch berechnet. Zur Berechnung der aktuellen Reichweite wird der berechnete aktuelle Energieinhalt der mindestens einen Batterie geteilt durch eine Summe aus dem umgerechneten entfernungsbezogenen Wert des aktuellen zweiten Teiltemperierungsenergieverbrauchs und dem entfernungsbezogenen durchschnittlichen Antriebsenergieverbrauch.

Bevorzugt wird die berechnete aktuelle Reichweite des Elektrofahrzeugs ausgegeben. Beispielsweise wird die berechnete aktuelle Reichweite dem Fahrer des Elektrofahrzeugs auf der Sammelanzeige angezeigt, so dass er informiert wird wie weit er noch fahren kann, bis ein Aufladen des Elektrofahrzeugs erforderlich wird.

Die nach dem Vorliegen eines Abschlusses der transienten Phase fortgesetzten Schritte können vorteilhaft wiederholt werden. Dadurch wird die Reichweite des Elektrofahrzeugs immer aktualisiert. Somit kann der Fahrer des Elektrofahrzeugs immer über die aktuelle Reichweite informiert werden. Hierbei kann in dem Fall, dass keine eventuell auftretenden Störgrößen vorliegen, die beispielsweise durch Sonneneinstrahlung und/oder Erhöhung einer Anzahl von Fahrgästen verursacht werden, davon ausgegangen werden, dass der aktuelle zweite Teiltemperierungsenergieverbrauch nahezu konstant ist. Somit kann der ermittelte aktuelle zweite Teiltemperierungsenergieverbrauch bei der Berechnung der aktuellen Reichweite immer verwendet werden.

Vorteilhaft werden die eventuell auftretenden Störgrößen bei der Berechnung der aktuellen Reichweite durch die Überwachung des Abschlusses der transienten Phase berücksichtigt. In diesem Fall, wird die Reichweite gemäß der Schritte vor dem Vorliegen einer stationären Phase erneut berechnet.

Ferner wird ein Fahrerassistenzsystem vorgeschlagen, das zur Ausführung des erfindungsgemäßen ersten und/oder zweiten Verfahrens eingerichtet ist.

Weiterhin wird ein Computerprogramm vorgeschlagen, das Befehle umfasst, die bei der Ausführung durch einen Computer diesen veranlassen, das erfindungsgemäße erste und/oder zweite Verfahren auszuführen.

Es wird auch ein computerlesbares Speichermedium vorgeschlagen, das Befehle umfasst, die bei der Ausführung durch einen Computer diesen veranlassen, das erfindungsgemäße erste und/oder zweite Verfahren auszuführen.

Ferner wird ein Elektrofahrzeug vorgeschlagen, das zur Durchführung des erfindungsgemäßen ersten und/oder zweiten Verfahrens eingerichtet ist.

### Vorteile der Erfindung

In einem Elektrofahrzeug müssen sowohl der Innenraum als auch die Hochvoltkomponenten wie z.B. eine Traktionsbatterie und eine Leistungselektronik temperiert werden. Der Energiebedarf zur Temperierung hängt stark von den aktuellen Temperaturen der zu temperierenden Komponenten und des Innenraums, sowie von der aktuellen Umgebungstemperatur ab. Diese Haupteinflussfaktoren werden durch das erfindungsgemäße erste und/oder zweite Verfahren deutlich präziser abgebildet, sodass der zukünftige Energieverbrauch wesentlich genauer projiziert werden kann. Demzufolge kann eine Reichweite des Elektrofahrzeugs deutlich genauer abgeschätzt werden.

Mit Hilfe der Integration einer Lernfunktion, die dafür sorgt, dass die vorgespeicherten typischen Energieverbräche an ein Nutzungsprofil eines Fahrers und/oder eines Fahrgasts angelernt werden können, lässt sich die Genauigkeit des Abschätzens der Reichweite weiter erhöhen.

Die genauere Abschätzung der Reichweite hat zur Folge, dass einem Fahrer und/oder einem Fahrgast die Angst genommen werden kann, sein Ziel nicht zu erreichen, sowie mehr Vertrauen in die vom Fahrzeug angegebene Restreichweite zu erhalten. Somit trägt das erfindungsgemäße erste und/oder zweite Verfahren auch dazu bei, ein Elektrofahrzeug attraktiver für die Kunden zu machen.

Die verbesserte Abbildung der realen Temperierungsenergieverbräuche kann weiterhin verwendet werden, um dem Fahrer Sparmaßnahmen anzubieten. So kann zum Beispiel über die Sammelanzeige ausgegeben werden, wie viel Reichweite der Fahrer dazu gewinnen kann, wenn er auf die Temperierung des Innenraums verzichtet und/oder die Wunschtemperatur anpasst.

Außerdem kann eine Logik implementiert werden, die bei geringen Ladezuständen der mindestens einen Batterie dafür sorgt, dass keine Temperierung mehr stattfindet und somit die Restreichweite erhöht wird.

### Kurze Beschreibung der Zeichnungen

Ausführungsformen der Erfindung werden anhand der Zeichnungen und der nachfolgenden Beschreibung näher erläutert.

Es zeigen:
- Figur 1: ein Flussdiagramm des erfindungsgemäßen zweiten Verfahrens zum Abschätzen einer Reichweite eines Elektrofahrzeugs und
- Figur 2: einen beispielhaften zeitlichen Verlauf einer Leistungsaufnahme zur Temperierung des Elektrofahrzeugs.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

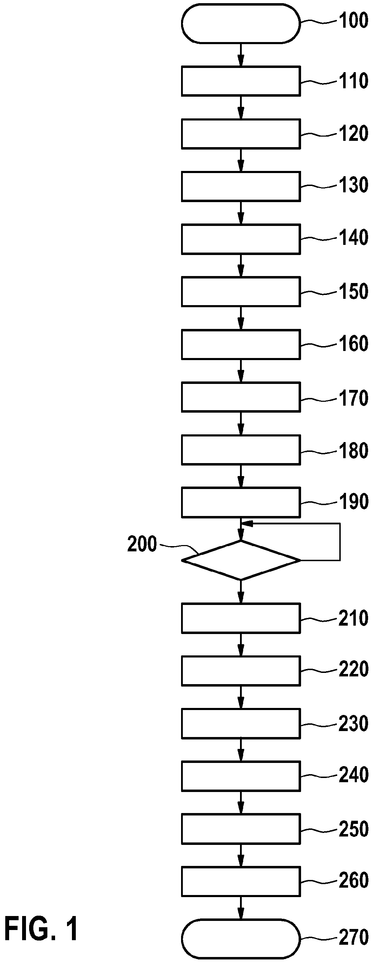

Figur 1 zeigt ein Flussdiagramm des erfindungsgemäßen zweiten Verfahrens zum Abschätzen einer Reichweite eines Elektrofahrzeugs.

In einem Schritt 100 wird das erfindungsgemäße zweiten Verfahren gestartet.

Folgend wird eine Umgebungstemperatur in einem Schritt 110 gemessen. Anschließend oder gleichzeitig werden eine Ist- und eine Soll-Temperatur in einem Schritt 120 bestimmt. Unter der Ist-Temperatur wird eine aktuelle Temperatur eines Innenraums des Elektrofahrzeugs und/oder von zu temperierenden Komponenten des Elektrofahrzeugs verstanden, während unter der Soll-Temperatur eine gewünschte Temperatur des Innenraums des Elektrofahrzeugs und/oder eine Betriebstemperatur der zu temperierenden Komponenten des Elektrofahrzeugs verstanden wird. Eine zu temperierende Komponente des Elektrofahrzeugs kann beispielsweise eine Batterie, ein Elektromotor oder eine Leistungselektronik zur Steuerung des Elektromotors sein.

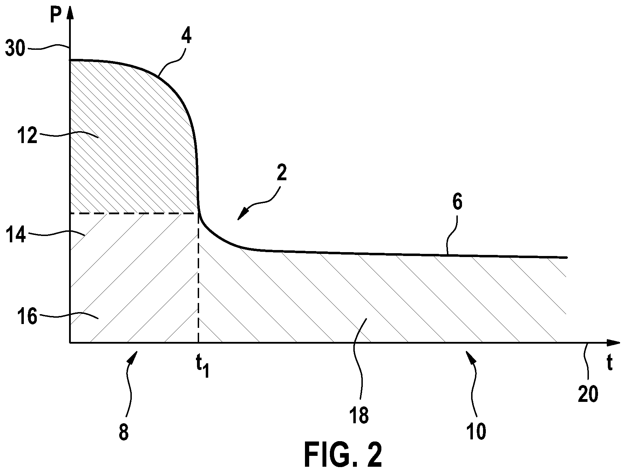

Danach wird in einem Schritt 130 ein erster Teiltemperierungsenergieverbrauch 12 (siehe Figur 2) in einer transienten Phase 8 (siehe Figur 2) anhand der Temperaturdifferenz der Ist- und Soll-Temperatur aus vorgespeicherten typischen ersten Teiltemperierungsenergieverbräuchen 12 ermittelt. Dabei ist unter der transienten Phase 8 eine Phase zu verstehen, in der das Elektrofahrzeug einen erhöhten Leistungsbedarf zur Temperierung der zu temperierenden Komponenten und/oder des Innenraums hat.

Anschließend oder gleichzeitig wird in einem Schritt 140 ein zweiter Teiltemperierungsenergieverbrauch 14 (siehe Figur 2) in einer stationären Phase 10 (siehe Figur 2) anhand der Umgebungstemperatur aus vorgespeicherten typischen zweiten Teiltemperierungsenergieverbräuchen 14 ermittelt. Dabei ist unter der stationären Phase 10 eine Phase zu verstehen, in der der zweite Teiltemperierungsenergieverbrauch 14 nahezu konstant ist.

Die Summe des ersten und zweiten Teiltemperierungsenergieverbrauchs 12, 14 stellt dann den abgeschätzten Temperierungsenergieverbrauch 16 (siehe Figur 2)in der transienten Phase dar.

Danach oder gleichzeitig wird ein Ladezustand von mindestens einer Batterie des Elektrofahrzeugs in einem Schritt 150 ermittelt, aus dem ein Energieinhalt der mindestens einen Batterie berechnet wird.

Folgend wird in einem Schritt 160 ein entfernungsbezogener durchschnittlicher Antriebsenergieverbrauch des Elektrofahrzeugs anhand des ermittelten Ladezustands berechnet. Der gewichtete durchschnittliche Antriebsenergieverbrauch wird bevorzugt aus einem Langzeitdurchschnittsverbrauch und einem Kurzzeitdurchschnittsverbrauch berechnet, die in Abhängigkeit vom Ladezustand der mindestens einen Batterie zueinander gewichtet werden.

Anschließend oder gleichzeitig wird eine gewichtete durchschnittliche Geschwindigkeit des Elektrofahrzeugs anhand des ermittelten Ladezustands in einem Schritt 170 berechnet. Vorzugsweise wird die gewichtete durchschnittliche Geschwindigkeit des Elektrofahrzeugs aus einer Langzeitdurchschnittsgeschwindigkeit und einer Kurzzeitdurchschnittsgeschwindigkeit berechnet, die in Abhängigkeit vom Ladezustand der mindestens einen Batterie zueinander gewichtet werden.

Danach wird in einem Schritt 180 der ermittelte zweite Teiltemperierungsenergieverbrauch 14 in einen entfernungsbezogenen Wert anhand der gewichteten durchschnittlichen Geschwindigkeit des Elektrofahrzeugs umgerechnet.

Die Reichweite des Elektrofahrzeugs wird folgend in einem Schritt 190 aus dem Energieinhalt der mindestens einen Batterie, dem ersten Teiltemperierungsenergieverbrauch 12, dem umgerechneten entfernungsbezogenen Wert des ermittelten zweiten Teiltemperierungsenergieverbrauchs 14 und dem entfernungsbezogenen durchschnittlichen Antriebsenergieverbrauch berechnet. Dabei wird zunächst eine korrigierte verfügbare Batterieenergie berechnet, wobei der ermittelte erste Teiltemperierungsenergieverbrauch 12 von dem ermittelten Energieinhalt der mindestens einen Batterie subtrahiert wird. Danach wird eine Summe aus dem umgerechneten entfernungsbezogenen Wert des ermittelten zweiten Teiltemperierungsenergieverbrauchs 14 und dem entfernungsbezogenen durchschnittlichen Antriebsenergieverbrauch berechnet. Zur Berechnung der Reichweite des Elektrofahrzeugs wird dann die korrigierte verfügbare Batterieenergie durch die Summe aus dem umgerechneten entfernungsbezogenen Wert des ermittelten zweiten Teiltemperierungsenergieverbrauchs 14 und dem entfernungsbezogenen durchschnittlichen Antriebsenergieverbrauch geteilt.

Die im Schritt 190 berechnete Reichweite wird dann ausgegeben und einem Fahrer beispielsweise auf einer Sammelanzeige angezeigt.

Bevorzugt wird ein Nutzungsprofil eines Fahrers und/oder eines Fahrgasts gespeichert, wobei das Nutzungsprofil erste Teiltemperierungsenergieverbräuche 12 des Fahrers und/oder des Fahrgasts von vergangenen Fahrzyklen in Abhängigkeit von der Ist- und Soll-Temperatur und zweite Teiltemperierungsenergieverbräuche 14 des Fahrers und/oder des Fahrgasts der vergangenen Fahrzyklen in Abhängigkeit von der Umgebungstemperatur umfasst. Außerdem umfasst das Nutzungsprofil eine Langzeit- und eine Kurzzeitdurchschnittsgeschwindigkeit sowie einen Langzeit- und einen Kurzzeitdurchschnittsverbrauch des Antriebs.

Die vorgespeicherten typischen ersten und zweiten Teiltemperierungsenergieverbräuche 12, 14 können mittels einer Lernfunktion an das Nutzungsprofil des Fahrers und/oder des Fahrgasts angelernt werden.

Bei oder nach der Berechnung der Reichweite des Elektrofahrzeugs wird in einem Schritt 200 überwacht, ob ein Abschluss der transienten Phase 8 erreicht wurde. Dabei wird die Temperaturdifferenz zwischen der Ist- und der Soll-Temperatur des Innenraums und/oder der zu temperierenden Komponenten geprüft. Die transiente Phase 8 wird als abgeschlossen angesehen, wenn die Temperaturdifferenz zwischen der Ist- und der Soll-Temperatur in einem Bereich von -2 K bis +2 K, bevorzugt von -1 K bis +1 K, liegt.

Beim Vorliegen des Abschlusses der transienten Phase 8 wird das erfindungsgemäße zweite Verfahren fortgesetzt und die Reichweite des Elektrofahrzeugs erneut berechnet.

Dabei wird zunächst in einem Schritt 210 ein aktueller zweiter Teiltemperierungsenergieverbrauch 18 ermittelt. Folgend oder gleichzeitig wird ein aktueller Ladezustand der mindestens einen Batterie in einem Schritt 220 ermittelt, aus dem ein aktueller Energieinhalt der mindestens einen Batterie berechnet wird.

Anschließend wird ein entfernungsbezogener durchschnittlicher Antriebsenergieverbrauch des Elektrofahrzeugs anhand des aktuellen Ladezustands in einem Schritt 230 berechnet.

Danach oder gleichzeitig wird in einem Schritt 240 eine gewichtete durchschnittliche Geschwindigkeit des Elektrofahrzeugs anhand des aktuellen Ladezustands berechnet.

Anschließend wird der aktuelle zweite Teiltemperierungsenergieverbrauch 18 in einen entfernungsbezogenen Wert anhand der durchschnittlichen Geschwindigkeit des Elektrofahrzeugs in einem Schritt 250 umgerechnet.

Folgend wird in einem Schritt 260 eine Reichweite des Elektrofahrzeugs aus dem aktuellen Energieinhalt der mindestens einen Batterie, dem umgerechneten Wert des aktuellen zweiten Teiltemperierungsenergieverbrauchs 18 und dem entfernungsbezogenen durchschnittlichen Antriebsenergieverbrauch berechnet. Zur Berechnung der Reichweite wird der aktuellen Energieinhalt der mindestens einen Batterie geteilt durch eine Summe aus dem umgerechneten entfernungsbezogenen Wert des aktuellen zweiten Teiltemperierungsenergieverbrauchs 18 und dem entfernungsbezogenen durchschnittlichen Antriebsenergieverbrauch.

Die im Schritt 260 berechnete Reichweite wird dann in einem Schritt 270 ausgegeben und dem Fahrer angezeigt.

Die Schritte 210 bis 270 können vorteilhaft wiederholt werden. Dadurch wird die Reichweite des Elektrofahrzeugs immer aktualisiert. Somit kann der Fahrer des Elektrofahrzeugs immer über die aktuelle Reichweite informiert werden. Hierbei kann in dem Fall, dass keine eventuell auftretenden Störgrößen vorliegen, die beispielsweise durch Sonneneinstrahlung und/oder Erhöhung einer Anzahl von Fahrgästen verursacht werden, davon ausgegangen werden, dass der aktuelle zweite Teiltemperierungsenergieverbrauch 18 nahezu konstant ist. Somit kann der im Schritt 210 ermittelte aktuelle zweite Teiltemperierungsenergieverbrauch 18 bei der Berechnung der aktuellen Reichweite immer verwendet werden.

Vorteilhaft können die eventuell auftretenden Störgrößen bei der Berechnung der aktuellen Reichweite durch die im Schritt 200 durchgeführte Überwachung berücksichtigt werden. In diesem Fall, wird die Reichweite gemäß den Schritten 110 bis 190 erneut berechnet.

Figur 2 zeigt beispielhaft einen zeitlichen Verlauf 2 einer Leistungsaufnahme zur Temperierung des Elektrofahrzeugs. Dabei wird der zeitliche Verlauf 2 in einer zweidimensionalen Darstellung gezeigt. Auf einer ersten Achse 20 ist die Zeit aufgetragen, während auf einer zweiten Achse 30, die senkrecht zu der ersten Achse 20 steht, die Leistungsaufnahme der zu temperierenden Komponenten bzw. des zu temperierenden Innenraums aufgetragen ist.

Der zeitliche Verlauf 2 wird dabei in einen ersten Abschnitt 4, welcher die Leistungsaufnahme in einer transienten Phase 8 zeigt, und einen zweiten Abschnitt 6, welcher die Leistungsaufnahme in einer stationären Phase 10 zeigt, unterteilt. Die transiente Phase 8 und die stationäre Phase 10 trennen sich zu einem Zeitpunkt tl, bei welchem die transiente Phase 8 als abgeschlossen angesehen werden kann. Die transiente Phase 8 kann als abgeschlossen angesehen werden, wenn eine Temperaturdifferenz zwischen einer Ist-Temperatur und einer Soll-Temperatur in einem Bereich von -2 K bis +2 K, bevorzugt von -1 K bis +1 K, liegt.

Eine erste Fläche, die durch die erste Achse 20 bis zum Zeitpunkt tl, die zweite Ache 30 und den ersten Abschnitt 4 gegrenzt ist, zeigt dabei einen abgeschätzten Temperierungsenergieverbrauch 16 in einer transienten Phase 8. Der abgeschätzten Temperierungsenergieverbrauch 16 stellt eine Summe von einen ersten Teiltemperierungsenergieverbrauch 12 und einen zweiten Teiltemperierungsenergieverbrauch 14 dar. Dabei wird der erste Teiltemperierungsenergieverbrauch 12 anhand einer vorzeichenbehafteten Temperaturdifferenz zwischen einer Ist- und einer Soll-Temperatur aus vorgespeicherten typischen ersten Teiltemperierungsenergieverbräuchen 12 ermittelt. Der zweite Teiltemperierungsenergieverbrauch 14 wird dann anhand einer Umgebungstemperatur aus vorgespeicherten typischen zweiten Teiltemperierungsenergieverbräuchen 14 ermittelt.

Eine zweite Fläche, die zwischen dem zweiten Abschnitt 6 und der ersten Achse 20 ab dem Zeitpunkt tl liegt, zeigt einen aktuellen zweiten Teiltemperierungsenergieverbrauch 18 des Elektrofahrzeugs. Der aktuelle zweite Teiltemperierungsenergieverbrauch 18 kann durch eventuell auftretende Störgrößen beeinflusst werden und wird daher Unterberücksichtigung von aktuellen Gegebenheiten ermittelt.

Der in Figur 2 gezeigte zeitliche Verlauf 2 der Leistungsaufnahme zur Temperierung des Elektrofahrzeugs kann einen vorgespeicherten typischen Temperierungsenergieverbrauch darstellen. Er kann auch einen gespeicherten Temperierungsenergieverbrauch eines Nutzungsprofils eines Fahrers und/oder eines Fahrgasts darstellen, an welchen der vorgespeicherten typischen Temperierungsenergieverbrach angelernt wird.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Abschätzen eines Temperierungsenergieverbrauchs eines Elektrofahrzeugs, umfassend folgende Schritte:
- Messung einer Umgebungstemperatur;
- Bestimmung einer Ist-Temperatur und einer Soll-Temperatur von zu temperierenden Komponenten und/oder Innenraum des Elektrofahrzeugs;
- Ermittlung eines ersten Teiltemperierungsenergieverbrauchs (12) in einer transienten Phase (8) anhand einer vorzeichenbehafteten Temperaturdifferenz zwischen der Ist- und der Soll-Temperatur und aus vorgespeicherten typischen ersten Teiltemperierungsenergieverbräuchen (12);
- Ermittlung eines zweiten Teiltemperierungsenergieverbrauchs (14) in einer stationären Phase (10) anhand der Umgebungstemperatur und aus vorgespeicherten typischen zweiten Teiltemperierungsenergieverbräuchen (14).

2. Verfahren nach Anspruch 1, **dadurch gekennzeichnet, dass** ein Nutzungsprofil eines Fahrers und/oder eines Fahrgasts gespeichert wird, wobei das Nutzungsprofil erste Teiltemperierungsenergieverbräuche (12) des Fahrers und/oder des Fahrgasts von vergangenen Fahrzyklen in Abhängigkeit von der vorzeichenbehafteten Temperaturdifferenz zwischen der Ist- und Soll-Temperatur und zweite Teiltemperierungsenergieverbräuche (14) des Fahrers und/oder des Fahrgasts der vergangenen Fahrzyklen in Abhängigkeit von der Umgebungstemperatur umfasst.

3. Verfahren nach Anspruch 2, **dadurch gekennzeichnet, dass** die vorgespeicherten typischen ersten und zweiten Teiltemperierungsenergieverbräuche (12, 14) an das gespeicherte Nutzungsprofil des Fahrers und/oder des Fahrgasts angelernt werden.

4. Verfahren zum Abschätzen einer Reichweite eines Elektrofahrzeugs, umfassend folgende Schritte:
- Abschätzen eines Temperierungsenergieverbrauchs (16) gemäß dem Verfahren nach einem der Ansprüche 1 bis 3;
- Ermittlung eines Ladezustands von mindestens einer Batterie des Elektrofahrzeugs, aus welchem ein Energieinhalt der mindestens einen Batterie berechnet wird;
- Berechnung eines entfernungsbezogenen durchschnittlichen Antriebsenergieverbrauchs des Elektrofahrzeugs anhand des ermittelten Ladezustands und aus vorgespeicherten Antriebsenergieverbräuchen;
- Berechnung einer durchschnittlichen Geschwindigkeit des Elektrofahrzeugs anhand des ermittelten Ladezustands und aus vorgespeicherten Geschwindigkeiten;
- Umrechnung des ermittelten zweiten Teiltemperierungsenergieverbrauchs (14) in einen entfernungsbezogenen Wert anhand des berechneten durchschnittlichen Geschwindigkeit des Elektrofahrzeugs;
- Berechnung der Reichweite des Elektrofahrzeugs aus dem berechneten Energieinhalt der mindestens einen Batterie, dem ersten Teiltemperierungsenergieverbrauch (12), dem umgerechneten entfernungsbezogenen Wert des zweiten Teiltemperierungsenergieverbrauchs (14) und dem berechneten entfernungsbezogenen durchschnittlichen Antriebsenergieverbrauch;
- Ausgabe der berechneten Reichweite des Elektrofahrzeugs.

5. Verfahren nach Anspruch 4, **dadurch gekennzeichnet, dass** aus den vorgespeicherten Antriebsenergieverbräuchen ein Langzeitdurchschnittsverbrauch und ein Kurzzeitdurchschnittsverbrauch berechnet werden, aus welchen der entfernungsbezogene durchschnittliche Antriebsenergieverbrauch in Abhängigkeit vom Ladezustand der mindestens einen Batterie gewichtet berechnet wird.

6. Verfahren nach Anspruch 4 bis 5, **dadurch gekennzeichnet, dass** aus den vorgespeicherten Geschwindigkeiten eine Langzeitdurchschnittsgeschwindigkeit und eine Kurzzeitdurchschnittsgeschwindigkeit berechnet werden, aus welchen die durchschnittliche Geschwindigkeit des Elektrofahrzeugs in Abhängigkeit vom Ladezustand der mindestens einen Batterie gewichtet berechnet wird.

7. Verfahren nach einem der Ansprüche 4 bis 6, umfassend folgenden weiteren Schritt:
- Überwachung eines Abschlusses der transienten Phase (8) durch Prüfung der Temperaturdifferenz zwischen der Ist- und der Soll-Temperatur, wobei die transiente Phase (8) als abgeschlossen angesehen wird, wenn die Temperaturdifferenz zwischen der Ist- und der Soll-Temperatur in einem vorgegebenen Bereich liegt.

8. Verfahren nach Anspruch 7, umfassend folgende weitere Schritte nach dem Vorliegen des Abschlusses der transienten Phase (8):
- Ermittlung eines aktuellen zweiten Teiltemperierungsenergieverbrauchs (18);
- Ermittlung eines aktuellen Ladezustands der mindestens einen Batterie, aus welchem ein aktueller Energieinhalte der mindestens einen Batterie berechnet wird;
- Berechnung eines entfernungsbezogenen durchschnittlichen Antriebsenergieverbrauchs des Elektrofahrzeugs anhand des aktuellen Ladezustands und aus den vorgespeicherten Antriebsenergieverbräuchen;
- Berechnung einer durchschnittlichen Geschwindigkeit des Elektrofahrzeugs anhand des aktuellen Ladezustands und aus den vorgespeicherten Geschwindigkeiten;
- Umrechnung des aktuellen zweiten Teiltemperierungsenergieverbrauchs (18) in einen entfernungsbezogenen Wert anhand des berechneten durchschnittlichen Geschwindigkeit des Elektrofahrzeugs;
- Berechnung einer aktuellen Reichweite aus dem aktuellen Energieinhalt der mindestens einen Batterie, dem umgerechneten entfernungsbezogenen Wert des aktuellen zweiten Teiltemperierungsenergieverbrauchs (18) und dem berechneten entfernungsbezogenen durchschnittlichen Antriebsenergieverbrauch;
- Ausgabe der berechneten aktuellen Reichweite.

9. Fahrerassistenzsystem, das eingerichtet ist, das Verfahren nach einem der Ansprüche 1 bis 3 und/oder das Verfahren nach einem der Ansprüche 4 bis 8 auszuführen.

10. Computerprogramm, umfassend Befehle, die bei der Ausführung durch einen Computer diesen veranlassen, das Verfahren nach einem der Ansprüche 1 bis 3 und/oder das Verfahren nach einem der Ansprüche 4 bis 8 auszuführen.

11. Computerlesbares Speichermedium, umfassend Befehle, die bei der Ausführung durch einen Computer diesen veranlassen, das Verfahren nach einem der Ansprüche 1 bis 3 und/oder das Verfahren nach einem der Ansprüche 4 bis 8 auszuführen.

12. Elektrofahrzeug, das zur Durchführung des Verfahrens nach einem der Ansprüche 1 bis 3 und/oder das Verfahren nach einem der Ansprüche 4 bis 8 eingerichtet ist.
